# EUROPEAN PATENT SPECIFICATION

(11) **EP 2 975 702 B1**
(45) Date of publication and mention of the grant of the patent: **06.11.2024**
(21) Application number: 15177307.4
(22) Date of filing: 17.07.2015
(51) Int. Cl.: H01R 13/66, H01R 13/717

(54) **KIT OF PARTS FOR AN ELECTRICAL CONNECTOR FOR CONNECTING EXTERNAL DEVICE TO DRAW POWER FROM POWER SOURCE FOR VIDEO CAMERA**
KIT VON TEILEN FÜR EINEN ELEKTRISCHEN VERBINDER ZUM ANSCHLUSS EINER EXTERNEN VORRICHTUNG, UM ENERGIE AUS EINER ENERGIEQUELLE FÜR EINE VIDEOKAMERA ZU ZIEHEN
KIT DE PIÈCES POUR UN CONNECTEUR ÉLECTRIQUE POUR CONNECTER UN DISPOSITIF EXTERNE POUR EXTRAIRE DE L'ÉNERGIE D'UNE SOURCE D'ALIMENTATION POUR CAMÉRA VIDÉO

(30) Priority: 17.07.2014 US 201462025556 P; 30.04.2015 US 201514700691
(43) Date of publication of application: 20.01.2016
(73) Proprietor: 1593563 Ontario Inc., Toronto, ON M1B 4Y5 (CA)
(72) Inventor: SOOS, Emery Tibor, Pickering, Ontario L1W 3L4 (CA)
(74) Representative: Patentanwälte Bauer Vorberg Kayser

(56) References cited:
- EP-A1- 2 234 220
- DE-U1- 202006 002 606
- JP-A- H0 729 613
- US-A- 2 474 407
- US-A- 6 104 866
- US-A1- 2009 156 062
- US-A1- 2011 136 350
- US-B1- 6 220 872
- WELLEEN: "D-TAP DTAP Plug for DSLR Rig cable Ues to Anton Bauer Battery--Welleen Electronics Co.,Ltd", 25 June 2013 (2013-06-25), XP055561234, Retrieved from the Internet <URL:http://www.welleen.com/index.php?_m=mod_product&_a=view&p_id=1060> [retrieved on 20190225]

## Description

The present disclosure relates to electrical connectors, and more particularly to electrical connectors for connecting additional electrical loads to draw power from a power source for a video camera used in the filmmaking industry.

In the filmmaking industry, it is common to provide a connection port on a video camera that permits external electrical devices {i.e. devices aside from the video camera itself) to draw power from the video camera's battery pack. A typical connection port on a video camera is sometimes referred to as an Anton Bauer connection port. Connectors that are configured to mate with the Anton Bauer connection port may be referred to as Anton Bauer connectors, or Anton Bauer P-taps, or D-taps. The Anton Bauer connection port employs two female terminals which are surrounded by a D-shaped surround that is intended to receive a connector with two male terminals and a D-shaped lip that mates with the D-shaped surround. The D-shaped surround and lip are intended to permit P-taps to connect to the female terminals in only one way, so that the current flow to an external device at the other end of the connector occurs only in a selected flow direction. This helps to prevent a situation where the current flow is in the opposite direction to that required by the external device, which can damage certain types of devices. However, it has been found that the D-shaped surround and lip are sufficiently close to being rectangular that it is possible in some circumstances, for the D-shaped lip to be inserted onto the D-shaped surround the wrong way, potentially leading to damage of the device connected to the other end of the connector.

In addition, a number of companies supply the P-taps in the form of a kit of parts, thereby permitting a purchaser to manufacture their own connector assembly with an Anton Bauer connector at one end, an electrical cable leading from it, and either an electrical device directly connected to the other end of the cable, or another type of connector at the other end of the cable for connection to an electrical device. For example, a Lightning^{™} connector can be provided at the other end of the cable, so as to permit connection to an iPhone^{™} by Apple, Inc., of Cupertino, California, USA, thereby permitting charging of the device using power from the battery pack on the video camera. However, to form the Anton Bauer connector from the kit of parts and to connect an end of an electrical cable to it can be time consuming and relatively difficult. Additionally, it is relatively easy for errors to be made in assembling the connector, leading to short circuits, polarity reversal, or other problems.

There is consequently a need for a connector that connects to an Anton Bauer connection port that addresses at least one of these and/or other shortcomings in existing designs.

EP 2 234 220 A1 discloses an outlet which includes a plurality of blade receiving members adapted in use to be connected respectively to a plurality of DC supply lines, and to be connected respectively to a plurality of blades of an outlet plug. The outlet includes a wiring detecting means.

US 6,220,872 B1 discloses a modular power supply having a standard structure to engage with a variety of sockets and including a casing, a circuit board and a plural number of sockets. The circuit board has circuits to convert alternate current into direct current and a connector room at one end thereof for engaging with a socket.

US 2011/0136350 A1 describes improved capabilities for a cable connector. The cable connector may have magnetic properties and/or a locking mechanism. The cable connector may be an HDMI connector and the cable may be an HDMI cable. The connector may be plugged into the corresponding male/female connector port and be held in position by the magnetic properties associated with the connector and the port and/or by a lock lever mechanism.

JP H07 29613 discloses an electric charging connector which receives an output of an electric charger. A reverse flow preventing diode is connected in the forward direction with respect to an output of a positive electrode. The diode is connected to a positive electrode charging terminal on the side of a cathode. The product "D-TAP DTAP Plug for DSLR Rig cable Ues to Anton Bauer Battery" by Welleen Electronics CO., Ltd., disclosed at the URL http://www.welleen.com/index.php? m=mod product& a=view&p id=1060 is a kit of parts for an electrical connector for a D-tap connection port and is considered the closest prior art.

A kit of parts for an electrical connector is disclosed according to claim 1.
Figure 1 is an exploded perspective view of a kit of parts for an electrical connector in accordance with the teachings of the present disclosure; Figure 1a is a perspective view of an Anton Bauer connection port that is available on some video cameras;
Figure 2 is a perspective view of a portion of a housing from the kit of parts shown in Figure 1;
Figures 3a and 3b are perspective views of another portion of the housing shown in Figure 1;
Figure 4a is an exploded perspective view of portions of the housing shown in Figure 1 with breakaway panels removed to form apertures;
Figure 4b is another exploded perspective view of portions of the housing shown in Figure 1 with only selected breakaway panels removed to form apertures;
Figure 5 is a perspective view of a printed circuit board assembly shown in Figure 1 with an electrical cable partially connected thereto;
Figure 5a is a perspective exploded view of the printed circuit board assembly shown in Figure 1;
Figure 6 is a perspective view illustrating the insertion of the printed circuit board assembly shown in Figure 5 into the housing portion shown in Figures 3a and 3b;
Figure 7 is a perspective view illustrating the insertion of a tie wrap shown in Figure 1 into the subassembly shown in Figure 6;
Figure 7a is a perspective view of the tie wrap shown in Figure 1 prior to tightening around the electrical cable shown in Figure 5;
Figure 8 is a perspective view illustrating the insertion of the housing portion shown in Figure 2 onto the subassembly shown in Figure 7;
Figure 9 is a perspective view illustrating the insertion of a fastener shown in Figure 1 into the subassembly shown in Figure 8;
Figure 10 is a flow diagram illustrating a method carried out by a microprocessor that is part of the printed circuit board assembly shown in Figure 5; and
Figure 11 is a flow diagram illustrating a method of making a printed circuit board assembly.

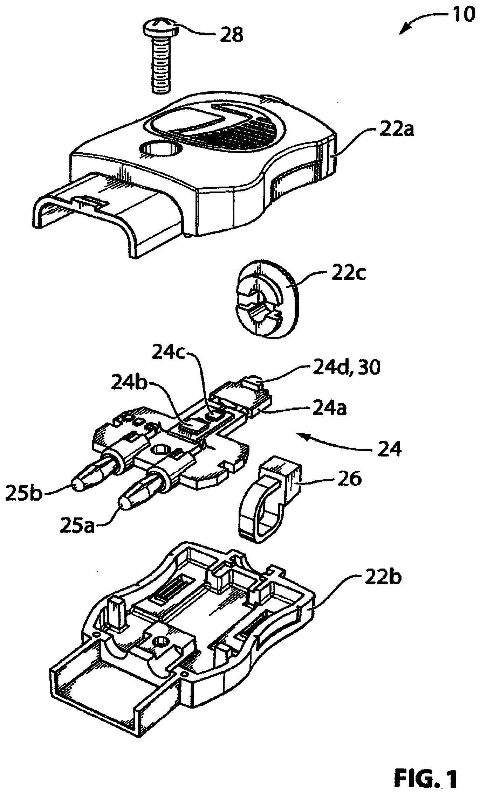

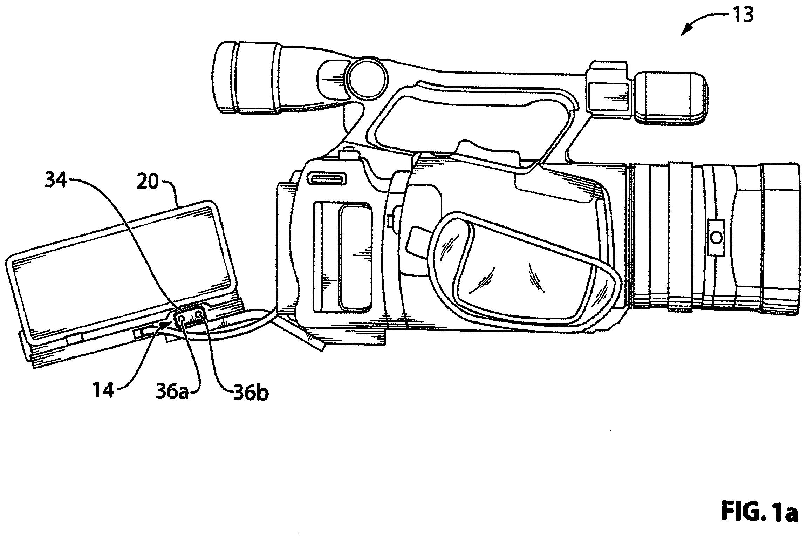

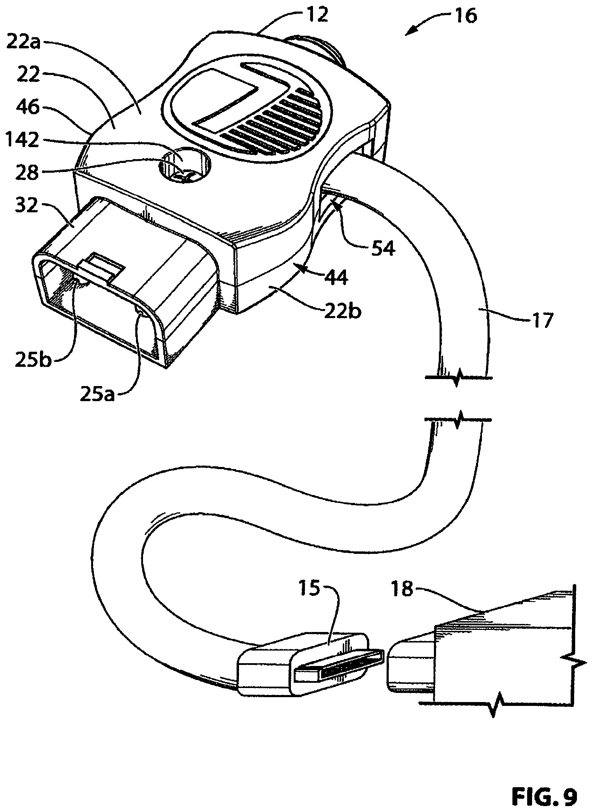

Reference is made to Figure 1, which shows a kit of parts 10 in accordance with an embodiment of the present disclosure. The kit of parts 10 is used for forming an electrical connector 12 (Figure 9) that is connectable to an Anton Bauer connection port shown at 14 in Figure 1a on a video camera 13. The connector 12 is part of a connector assembly 16 shown in Figure 9 that additionally includes an electric cable 17. The connector assembly 16 is used to connect an electrical device 18 to the connection port 14 so as to draw power from a power source 19 (Figure 1a) for the video camera 13. The power source for the video camera 13 may be a battery pack 20 on the video camera 13, as shown in Figure 1a. Alternatively, the power source could be provided via a cable connection from the video camera 13 to A/C wall power.

The kit of parts 10 includes a group of housing portions that mate together to form a housing (shown at 22 in Figure 9), a printed circuit board 24 assembly that includes a printed circuit board 24a, a microcontroller 24b, a circuit 24c, an output device 24d, and a pair of male terminals 25a and 25b. The circuit 24c is represented by simple lines shown on the printed circuit board 24a in Figure 1. It will be understood that these lines are not intended to show the full detail of the actual circuit provided on the printed circuit board 24a. The kit of parts 10 further includes a tie wrap 26 and a housing fastener 28.

The housing portions include a first housing portion 22a and a second housing portion 22b, that together provide the primary physical protection for the components therein, and, in the embodiment shown, a third housing portion, which is a transparent cover 22c used to provide a window to show a printed circuit board-mounted light emitting diode (LED) 30 that is, in the embodiment shown, the output device 24d, which is inside the housing 22 when the housing 22 is fully assembled.

The housing portions 22a and 22b together form a D-shaped lip 32 (Figure 9) that is mateable with a D-shaped surround 34 on the Anton Bauer connection port 14 (Figure 1a), so as to permit the connector 12 to mount to the Anton Bauer connection port 14 in only one orientation so that the male terminals 25a and 25b are received in female terminals 36a and 36b on the connection port 14 to provide a selected current direction to a circuit formed therewith.

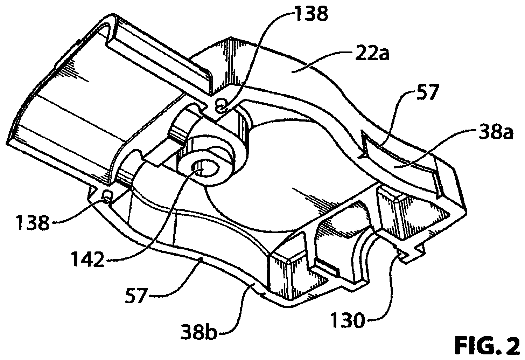

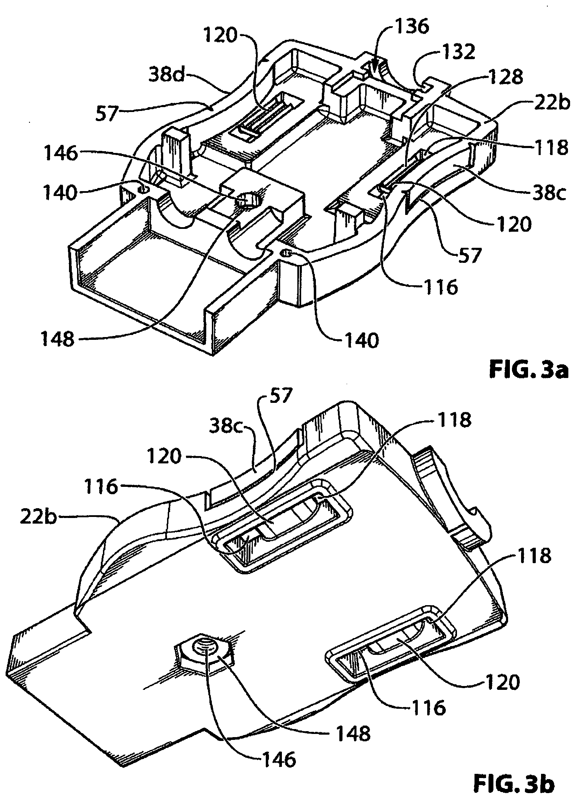

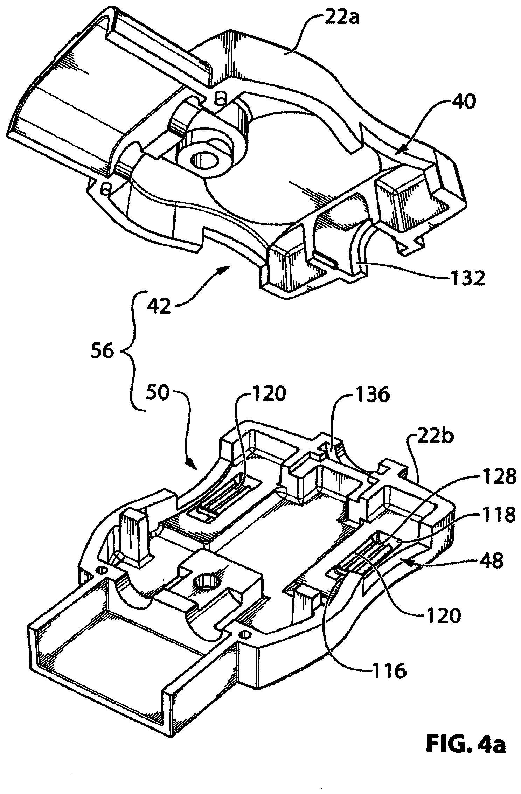

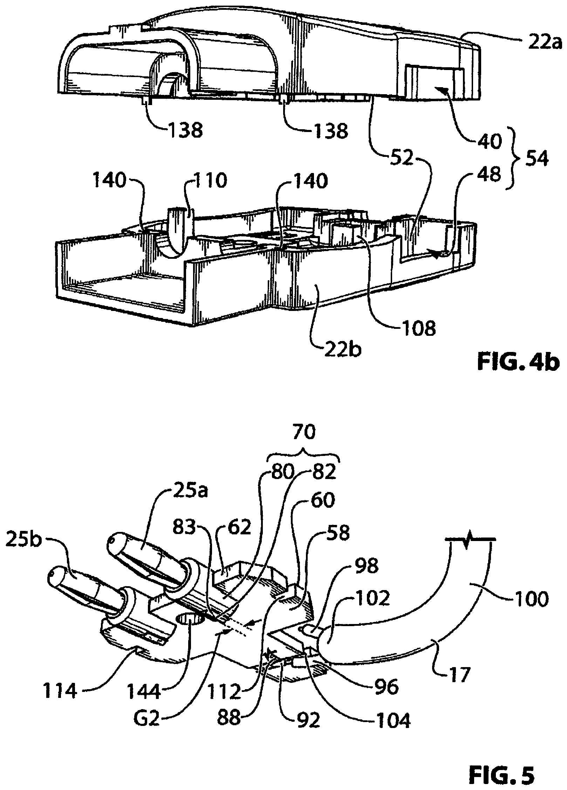

The housing portions 22a and 22b are shown more clearly in Figures 2, 3a and 3b. The group of housing portions (and in particular the housing portion 22a) has a first breakaway member 38a and a second breakaway member 38b (Figure 2) connected thereto. The first and second breakaway members 38a and 38b are selectively separable from the group of housing portions 22a and 22b to selectively form first and second apertures (shown at 40 and 42 in Figure 4a). The first and second apertures 40 and 42 would be positioned on first and second sides of the housing 22 respectively when the housing 22 is assembled. The first and second sides of the housing 22 are shown at 44 and 46 respectively in Figure 9. As noted above, in the embodiment shown, breakaway members 38a and 38b are provided on the first housing portion 22a. The group of housing portions 22a and 22b (and in particular the second housing member 22b) has third and fourth breakaway members 38c and 38d (Figure 3a) connected thereto, which are selectively separable from the group of housing portions to selectively form third and fourth apertures (shown at 48 and 50 respectively in Figure 4a). Each of the apertures 40, 42, 48 and 50 is sized to permit an electrical conduit to extend between an interior of the housing 22 and an exterior of the housing 22. The interior of the housing 22 is shown at 52 in Figures 4b, 6 and 7.

As can be seen in Figures 4b, 8 and 9, the first and third breakaway members 38a and 38c are positioned to be separable from the first and second housing portions 22a and 22b respectively so as to form a first enlarged aperture 54 when the housing portions 22a, 22b and 22c mate together to form the housing 22. Similarly, with reference to Figure 4a, the second and fourth breakaway members 38b and 38d are positioned to be separable from the first and second housing portions 22a and 22b respectively so as to form a second enlarged aperture 56 when the housing portions 22a, 22b and 22c mate together to form the housing 22.

The breakaway members 38a and 38b {Figure 2), and 38c and 38d (Figures 3a, 3b) may be integrally connected with the housing portions 22a and 22b, with a notch 57 separating each of the breakaway members 38a, 38b, 38c and 38d from the housing portions 22a and 22b. The notches 57 facilitate separation of the breakaway members 38a, 38b, 38c and 38d from the housing portions 22a and 22b. When assembling the connector 12, one can separate whichever breakaway members are desired so as to form an aperture on one side or the other of the housing 22 for the pass-through of the electrical conduit. In the embodiment shown, breakaway members 38a {Figure 2) and 38c (Figures 3a and 3b) have been removed so as to form the first enlarged aperture 54 (Figures 4b, 8 and 9) through which the electrical conduit 17 passes. In embodiments wherein the electrical conduit 17 is smaller in diameter than that which is shown, a single breakaway member (e.g, member 38a) may be removed so that a smaller aperture (e.g. aperture 40) is formed. By permitting different size apertures to be formed using the breakaway members, an aperture can be provided that is sized relatively snugly around the electrical conduit, thereby inhibiting the entry of debris and the like into the interior 52 of the housing 22 during use and transport of the connector assembly 16.

A step in the assembly of the connector assembly is to separate whichever breakaway members 38a-38d (Figures 2, 3a and 3b) are desired.

One can use a suitable tool such as pliers to grab whichever breakaway member is to be separated and to fold it or tear it from the associated housing portion 22a or 22b.

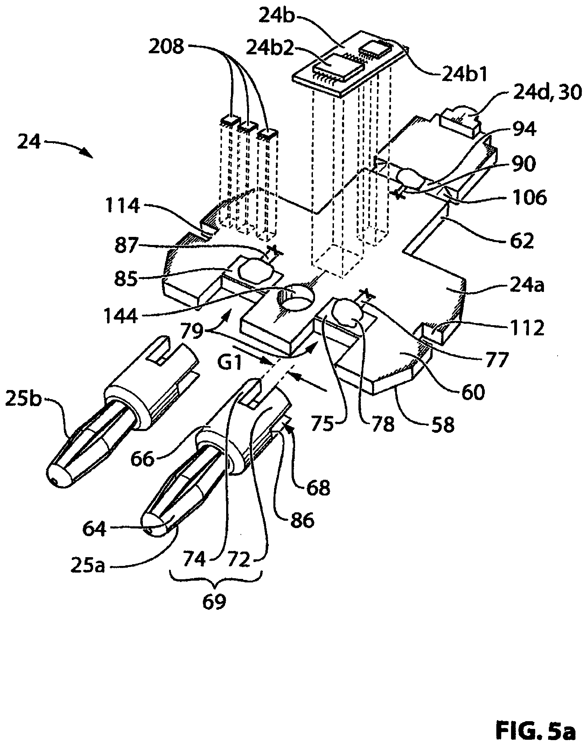

The printed circuit board assembly 24 is shown in Figure 5a as an exploded view. The printed circuit board assembly 24 has a first face 58 and a second face 60 that is opposite the first face 58. In the embodiment shown, the microcontroller 24b is mounted onto the second face 60 of the printed circuit board 24a to integrate into the circuit 24c. The light emitting diode (LED) 30 is mounted to the side edge shown at 62 of the printed circuit board 24a, but is connected electrically to electrical traces on the second face 60.

The printed circuit board 24a may be any suitable type of printed circuit board and may be a multi-layer configuration, including a layer of conductors on one or both of its faces and one or more layers of conductors internally.

The microcontroller 24b includes a memory 24b1 in which program code is stored, and a microprocessor 24b2 which is configured to execute the program code in memory 24b1. The microprocessor 24b2 and memory 24b1 are shown as being separate elements that are easily identifiable on the microcontroller 24b, however, it will be understood that this representation is for illustrative purposes only and that the actual microprocessor 24b2 and memory 24b1 may be integrated into the microcontroller 24b in such a way that one cannot visually discern them.

The microcontroller 24b may be any suitable type of microcontroller, such as, for example, known by a member of the PSoC (Programmable-System- on-Chip) family of microcontrollers provided by Cypress Semiconductor Corporation based in San Jose, California, USA. The microcontroller 24b is integrated into the circuit 24c for controlling the operation of the connector 12 (Figure 9).

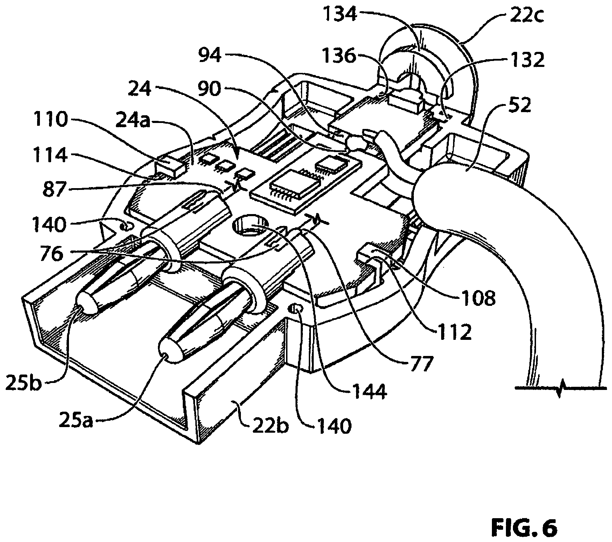

The mounting of the terminal 25a is as follows, with the understanding that the mounting of the terminal 25b may be substantially the same. The terminal 25a has a distal portion 64 that extends out from the printed circuit board 24a for connection to an electrical component (female terminal 36a) and a proximal portion 66 that has a slot 68 therein dividing the proximal portion 66 into a first face engaging structure 69 and a second face engaging structure 70, which are positioned to engage the first and second faces 58 and 60 respectively of the printed circuit board 24a. One of the first and second face engagement structures (in the example shown, second face engagement structure 70) includes a first engagement member 72 and a second engagement member 74. The first and second engagement members 72 and 74 are separated by a first gap G1. The face engaging structure 70 is electrically connected to a first electrical connection surface 75 on the printed circuit board 24a via a solder connection shown at 76 in Figure 6. Referring to Figure 5a, the first electrical connection surface 75 is connected to a first electrical trace 77. An advantage of providing the gap G1 is highlighted when one considers the method of mounting the terminal 25a to the printed circuit board 24a. As an initial step a selected first amount of solder material 78 (e.g. solder paste) is deposited on the printed circuit board 12 on the first electrical connection surface 75 that is on one of the first and second printed circuit board faces 58 and 60 (in the example shown, surface 75 is on the second printed circuit board face 60). Once the solder material 78 is deposited, the terminal 25a is slid onto the printed circuit board 24a (specifically, into locating slot 79 on the printed circuit board 24a) such that the face engagement structure 70 slides through the first amount of solder material 78 such that some solder material 78 is captured in the first gap G1. The solder material 78 is then melted and solidified to join the terminal 25a to the first electrical connection surface 75, thereby forming the solder connection 76 (Figure 6).

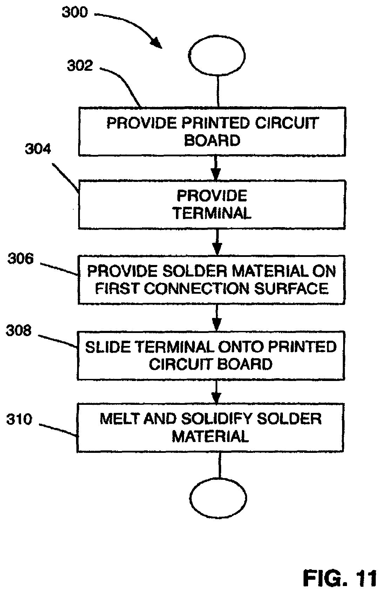

The above steps for mounting the terminal 25a may be described as steps in a method of making a printed circuit board assembly. The method is shown at 300 in Figure 11 and includes at least: step 302 which is to provide a printed circuit board (such as printed circuit board 24a), step 304 which is to provide a terminal (such as terminal 25a or 25b), step 306 which is to provide solder material on the first electrical connection surface on the printed circuit board, as described above, step 308 which is to slide the terminal onto the printed circuit board as described above, and step 310 which is to melt and solidify the solder material, as described above.

In the embodiment shown, the other of the first and second face engagement structures (in this example, the first face engagement structure 69) includes a third engagement member 80 and a fourth engagement member 82. Referring to Figure 5 the third and fourth engagement members 80 and 82 are separated by a second gap G2. The aforementioned initial step may further include providing a selected second amount of solder material on an optionally provided additional portion of the first electrical connection surface 75 that is on the other of the first and second faces 58 and 60 (in the example shown, first face 58) of the printed circuit board 24a. The step in which the terminal 25a is slid onto the printed circuit board 24a may further include sliding the terminal 25a onto the printed circuit board 24a such that the other of the first and second face engagement structures (in this example, structure 69) slides through the second amount of solder material 83 on the other of the first and second faces (in the example shown, face 58) such that some solder material is captured in the second gap G2. The step that includes melting and solidifying the solder material on the face 60 may further include melting and solidifying the solder material on the other of the first and second faces (e.g. face 58) to join the terminal 25a to the first electrical connection surface 75.

The second terminal 25b may connect to a second electrical connection surface 85 that connects to a second electrical trace 87 on the printed circuit board 24a in similar manner to how the first terminal 25a connects to the first electrical surface 75 and first electrical trace 77.

In the embodiment shown, the slot 68 has a base 86, and the first gap G1 is generally parallel to the base 86. In the embodiment shown, the second gap G2 is also generally parallel to the base 86. Other configurations are possible however.

In the embodiment shown, the distal portion 64 of the terminal 25a is male and is a banana plug, however, any other type of distal portion may be provided. For example, in an alternative embodiment the distal portion 64 may be female instead of male.

The kit of parts 10 may include the printed circuit board assembly 24 in its completed state. Alternatively one or more of the components 24b, 24c, 24d, 25a and 25b may be provided loose as part of the kit of parts and not premounted to the printed circuit board 24a.

The microcontroller 24b and light emitting diode (LED) 30 may be mounted to the printed circuit board 24a by any suitable means. Program code stored in memory 24b1 may be executed by the microprocessor 24b2 to control current flow from the first and second terminals 25a and 25b to third and fourth electrical traces shown at 88 and 90 that end at third and fourth electrical connection surfaces 92 and 94, which are provided for connection to first and second leads 96 and 98 of the electrical cable 17. A description of the program code is provided further below. Another step in the assembly of the connector assembly 16 (Figure 9) is shown in Figure 5, wherein the first lead 96 from the electrical cable 17 is connected (e.g. soldered) to the third connection surface 92 on the first face 58 of the printed circuit board 24a.

As shown in Figure 6, the printed circuit board 24a is then installed into the second housing portion 22b, with the electrical conduit 17 extending through the aperture 48. The printed circuit board 24a may be captured in the housing portion 22b by a pair of housing projections 108 and 110 on the housing portion 22b that engage snugly with a pair of notches 112 and 114 on the printed circuit board 24a. The engagement between the projections 108 and 110 and the notches 112 and 114 hold the printed circuit board 24a in place during plugging in and unplugging of the connector 12 (Figure 9) with respect to the connection port 14 (Figure 1a). This reduces stresses on the printed circuit board 24a and on the soldered connections of the printed circuit board 24a with the leads 96 and 98 during such plugging in and unplugging actions. By having snug engagement between the projections 108 and 110 and the notches 112 and 114 (as opposed to a loose engagement), the printed circuit board 24a is located fixedly in position in the housing 22 (Figure 9) so that there is substantially no movement of the printed circuit board 24a during plugging and unplugging with respect to the connection port 14, thereby ensuring that the housing 22 absorbs all forces during plugging and unplugging and that there is no relative movement between the leads 96 and 98 and the printed circuit board 24a thereby protecting the soldered connections further.

As can be seen, the cable 17 has sheathing 100 that surrounds the first and second leads 96 and 98. The sheathing 100 itself passes through the aperture 48 into the interior 52 of the housing 22 for reasons described further below. As a result, there is little distance between the end of the sheathing, shown at 102, and the side edge 62 of the printed circuit board 24a, and thus there is little room for the leads 96 and 98 to extend from the end 102 of the sheathing 100, along the side edge 62 and onto the third and fourth electrical connection surfaces 92 and 94 respectively. As a result, without any modification of the side edge 62, there is potential for the side edge 62, in some circumstances, to cut into and damage or even sever the leads 96 and 98. In order to mitigate this risk, a first groove 104 extends from the side edge 62 to the first face 58 in a first direction that is non parallel to the side edge 62 (i.e. that is at a non-zero angle relative to the side edge 62). Additionally, a second groove 106 extends from the side edge 62 to the second face 60 in a second direction that is non parallel to the side edge 62. These first and second grooves 104 and 106 provide a path for the leads 96 and 98 to reach the first and second faces 58 and 60 without risk of damaging the leads 96 and 98. As can be seen, the printed circuit board 24a includes a second pair of grooves 104 and 106 on the other side to accommodate the leads 96 and 98 if the cable 17 is mounted on the other side (i.e. side 46 of the connector 12 (Figure 9)). The electrical connection surfaces 92 and 94 extend between the two pairs of grooves 104 and 106.

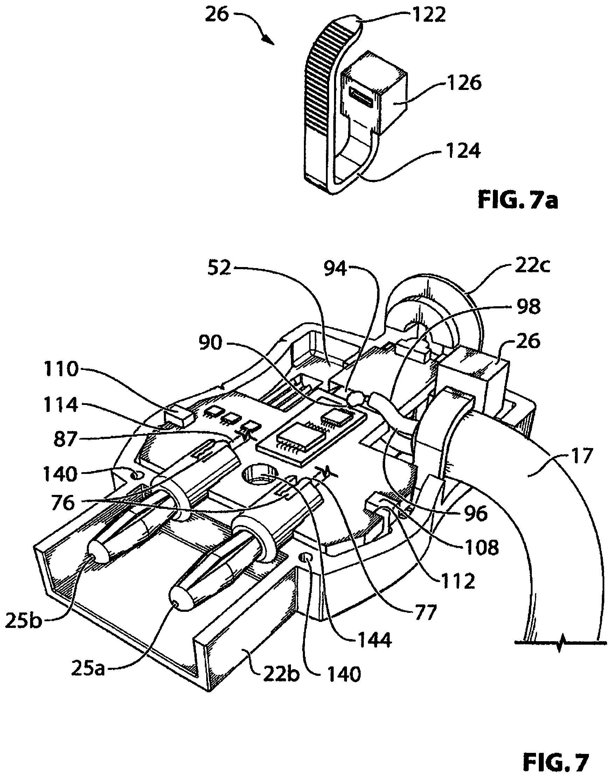

The next step in the assembly process is to secure the cable 17 to the housing portion 22b using the tie wrap 26, as shown in Figure 7. As can be seen in Figure 3b, the housing portion 22b has first and second tie wrap pass-through apertures 116 and 118 which border and define a tie wrap attachment member 120. The tie wrap 26 is initially in an open configuration as shown in Figure 7a, and has a first end 122 and a second end 124. A tie-wrap locking member 126 is provided at the second end 124 (which may comprises a cage with a plurality of ratchet teeth that engage corresponding ratchet teeth on the first end 122, as is commonly provided on tie wraps). The tie wrap 26 is passed through the apertures 116 and 118 (Figure 4b), around the attachment member 120 and is tightened around the sheathing 100 of the cable 17 to secure the cable 17 to the housing portion 22b (and therefore to the housing 22), as shown in Figure 7. In the embodiment shown, the locking member 126 of the tie wrap 26 faces the rear of the housing portion 22b, however this does not need to be the case.

In the embodiment shown, the attachment member 120 is simply a portion of the outer wall of the housing 22 (and of the housing portion 22b), as this structure is particularly strong and space efficient. However, any other suitable attachment member may alternatively be used, such as a post that projects into the interior 52 of the housing 22.

To assist the gripping of the cable 17, the housing 22 (or more specifically, the housing portion 22b) may include a plurality of teeth 128 on a first face 130 of the attachment member 120. The teeth 128 are positioned to grip the electrical cable 17 when the tie wrap 26 is tightly connected around the electrical cable 17 and the attachment member 120.

It will be noted that the housing portion 22b has an attachment member 120 with teeth 128 and apertures 116 and 118 on both sides, so as to grip the cable 17 whether the cable 17 is inserted on the right side or left side of the housing portion 22b.

After securing the cable 17 to the housing portion 22b, the second lead 98 is connected (e.g. soldered) to the fourth electrical connection surface 94, on the second face 60 of the printed circuit board 24a, shown in Figure 7. Because the cable 17 is already secured in place when this step is carried out, there is no risk of accidentally pulling the connection between the first lead 96 and the connection surface 92 during this step.

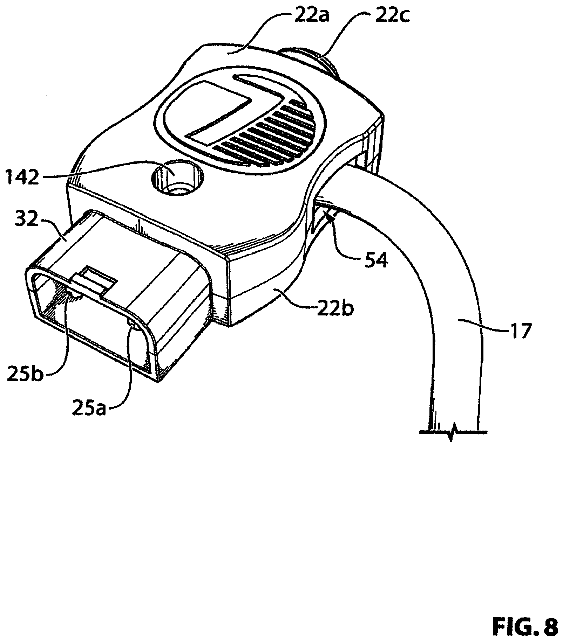

After the second lead 98 is soldered, the first housing portion 22a is installed on the second housing portion 22b, as shown in Figure 8. To locate the first housing portion 22a relative to the second housing portion 22b, The first and second housing portions 22a and 22b may include respective limit surfaces 130 and 132 (Figures 2 and 3a) that are engaged by a flange 134 (Figure 6) on the light emitting diode (LED) window 22c. The limit surface 132 is part of a slot 136 (Figure 3a) that receives the flange 134 (Figure 6) that fixedly holds the light emitting diode (LED) cover 22c in place on the second housing portion 22b.

Optionally, as shown in Figures 2 and 3a, the first and second housing portions 22a and 22b may also include other locating means, such as projections 138 on the first housing portion 22a that engage apertures 140 on the second housing portion 22b. Alternatively the projections and apertures may be omitted, however.

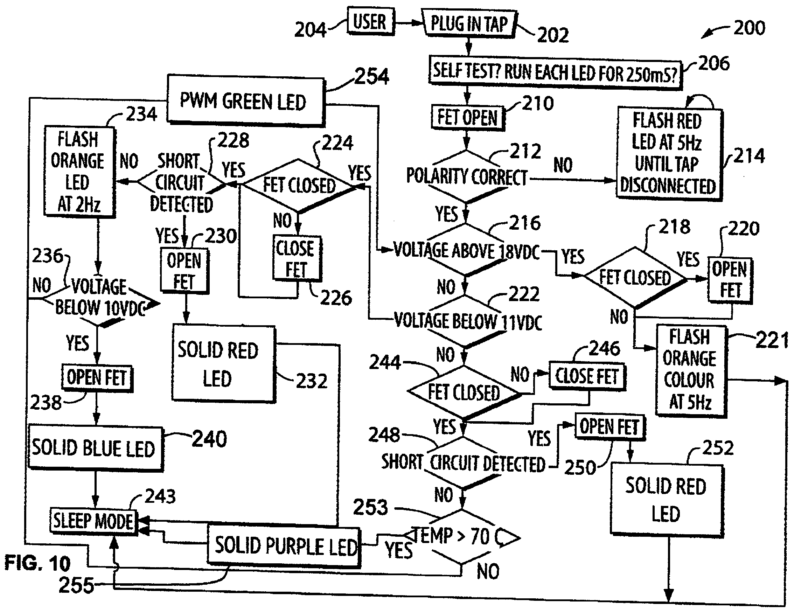

Once the first housing portion 22a is installed on the second housing portion 22b, the fastener 28 may be inserted into the apertures shown at 142 in the first housing portion 22a, 144 through the printed circuit board 24af 146 in the second housing portion 22b, to engage a nut 148 that is held in the second housing portion 22b (e.g. by press-fit). The second housing portion 22b may be provided with the nut 148 already therein so as to reduce the number of loose items in the kit of parts 10, or alternatively, the nut 148 may be provided loose, for the user to insert into place in the second housing portion 22b. Once the fastener 28 is installed, the connector assembly 16 is complete, as shown in Figure 9. Reference is made to Figure 10, which illustrates a method of operation of the electrical connector assembly that is carried out by the microcontroller 24b. As can be seen in Figure 10, the method is shown at 200. With reference to Figure 10, as well as Figures 1-9, the method 200 includes step 202 in which a user 204 plugs in the connector assembly 16 (Figure 9) to a connection port 14 (Figure 1a). Optionally, a step 206 is carried out in which the microcontroller 24b illuminates each light emitting diode (LED) 30 (in this example there is only one light emitting diode (LED) 30) for a brief period of time (e.g. 250 ms) to indicate that the light emitting diode (LED) 30 is functioning properly. One or more FETs, (field effect transistors), shown at 208 in Figure 5a, may be provided to control the flow of current to the electrical device 18. In the embodiment shown three FETs 208 are provided. Initially, the FETs 208 in the circuit 24c are kept open, at step 210. With the FETs 208 open, a number of checks are performed by the microcontroller 24b. At step 212 the microcontroller 24b checks if the polarity is correct. If the polarity is not correct (i.e. if the connection to the connection port 14 is reversed), then the microcontroller 24b outputs a signal indicating the reversed polarity at step 214. For example, the microcontroller 24b may cause the light emitting diode (LED) 30 to illuminate in red at 5 Hz until the connector assembly 16 is disconnected from the connection port 14.

If the connection is correct {i.e. if the polarity is correct), then, at step 216 the microcontroller 24b checks whether the voltage is above a selected maximum permitted voltage, which indicates an overvoltage condition that could damage the device 18. For example, the selected maximum permitted voltage may be 18VDC. If the voltage is above 18VDC then the microcontroller 24b checks whether the FETs 208 are closed at step 218. If the FETs 208 are closed, then the FETs 208 are opened at step 220. If the FETs 208 are already open (or after the FETs 208 are opened at step 220) the microcontroller 24b outputs a signal indicating the overvoltage condition at step 222. For example, the microcontroller 24b may cause the light emitting diode (LED) 30 to illuminate in orange at 5 Hz at step 221 for a period of time (e.g. 5 minutes) after which the connector assembly 16 may enter a sleep mode at step 243.

If the voltage is not above the maximum permitted voltage, then, at step 222 the microcontroller 24b checks whether the voltage is below a selected minimum permitted voltage, which indicates that an undervoltage condition is approaching. An undervoltage condition is indicative that the charge level of the battery pack (in situations where a battery pack is the power source 20) is so low that further discharge of the battery pack 20 could damage the battery pack in a way that impacts the inability for the battery pack 20 to fully charge thereafter. The selected first minimum permitted voltage may be any suitable value, such as, for example, 11VDC. If the voltage is below 11VDC then the microcontroller 24b checks whether the FETs 208 are closed at step 224. If the FETs 208 are not closed, then the FETs 208 are closed at step 226. If the FETs 208 are already closed (or after the FETs 208 are closed at step 226) the microcontroller 24b checks whether a short circuit is detected at step 228 (e.g. by determining whether the current in the circuit is above a selected maximum permitted current, such as, for example, 8 Amps). If a short circuit is detected, then the microcontroller 24b opens the FETs 208 at step 230, and outputs a signal indicating that a short circuit condition exists at step 232. For example, the microcontroller 24b may illuminate the light emitting diode (LED) 30 in solid red until the connector assembly 16 is disconnected from the connection port 14 or until the device 18 is disconnected from the connector assembly 16 if the device 18 is the source of the short circuit.

If, at step 228 the microcontroller 24b does not detect a short circuit, the microcontroller 24b may permit the FETs 208 to remain closed (thereby connecting the device 18 electrically to the battery pack 20 (Figure 1a)), but may output a signal indicating a low voltage warning condition at step 234 (e.g. by causing the light emitting diode (LED) 30 to flash orange at 2 Hz). The microcontroller 24b continues to check the voltage however to determine whether the voltage falls below 10 VDC (or some other selected minimum permitted voltage) at step 236, which is indicative that an undervoltage condition exists. If the voltage does fall below this other selected minimum permitted voltage, then the microcontroller 24b may open the FETs 208 at step 238 so as to prevent current flow to the device 18, and may output a signal indicating the second low (below 10VDC) voltage condition at step 240 (e.g. by causing the light emitting diode (LED) 30 to illuminate as solid blue). The microcontroller 24b continues to cause the light emitting diode (LED) 30 to glow solid blue for some period of time (e.g. 5 minutes) at which point the connector assembly 12 enters sleep mode at step 243.

Worded in another way (and more broadly in at least some senses), the microcontroller 24b (Figure 5a) may be configured to sense a voltage related to a voltage from the battery pack 20 (Figure 1a) in embodiments wherein the power source 20 is a battery pack, and to prevent a flow of current from the electrical power source 20 to the electrical conduit 17 (Figure 9) if the sensed voltage is below a selected first minimum permitted voltage (e.g. 10VDC). Additionally or alternatively the microcontroller 24b may be programmed to control the output device (e.g. light emitting diode (LED) 30) to indicate that there is an undervoltage condition present. The microcontroller 24b may also be programmed to output a signal to an output device (e.g. light emitting diode (LED) 30) to indicate if the sensed voltage is below a selected second minimum permitted voltage that is higher than the selected first minimum voltage (e.g. 11 VDC), to notify a user that an undervoltage condition is approaching.

If the voltage is determined to not fall below 11 VDC at step 222, then the microcontroller 24b may check if the FETs 208 are closed at step 244, and if the FETs 208 are open, the microcontroller 24b may close it at step 246, thereby connecting the device 18 to the battery pack 20. If the FETs 208 are already closed at step 244 (or once they are closed at step 246) the microcontroller 24b checks whether a short circuit is detected at step 248 (e.g. by determining whether the current is above a selected maximum permitted circuit). If a short circuit is detected, then the microcontroller 24b may open the FETs 208 at step 250 and may output a signal indicating that a short circuit condition exists (e.g. by illuminating the light emitting diode (LED) 30 solid red) for a period of time (e.g. 5 minutes) at which point the connector assembly 16 enters the sleep mode at step 243.

If no short circuit is detected at step 248, the microcontroller 24b may check at step 253 to determine whether there is an overtemperature condition at some point in the circuit, which indicates that some point in the circuit (e.g. the temperature of the microprocessor 24b2) has a temperature that is greater than a selected maximum permitted temperature, such as 70 degrees C. This overtemperature condition may be sensed using any suitable means, such as by an on-die thermal sensor that is associated with the microprocessor. By setting the maximum permitted temperature to a value that ensures that the elements of the connector 12, such as the microcontroller 24b, the memory 24c, the light emitting diode (LED) 30 and other components, do not overheat and incur damage, an inexpensive way is provided for protecting the connector 12 against such an event. If an overtemperature condition is determined to exist, then the microcontroller 24b may indicate this (e.g. by illuminating the light emitting diode (LED) 30 solid purple) and may send the connector 12 into the sleep mode at step 243.

If an overtemperature condition is not determined to exist, then the microcontroller 24b may be programmed to output a signal indicative of a healthy circuit between the device 18 and the battery pack 20 at step 254, {e.g. by illuminating the light emitting diode (LED) 30 to be green). In some embodiments, the microcontroller 24b may, using PWM, cause the light emitting diode (LED) 30 to flash at a selected frequency (e.g. 1 Hz) with a selected duty cycle. A healthy circuit, in the example described above, means that the voltage at the first and second terminals 25a and 25b is within a selected range (e.g. between 11-18VDC), that no short circuit is detected and that the polarity of the connection is not reversed. In some embodiments, the microcontroller 24b may not be programmed / configured to check for one or more of these aforementioned conditions (overvoltage, undervoltage, short circuit, polarity reversal, overtemperature). In such embodiments, the microcontroller 24b could instead monitor some other property or condition of a circuit that is considered to be determinative of whether the circuit is healthy.

Once a healthy circuit is determined to exist, control may then be sent back to step 216 wherein the microcontroller 24b checks again for an overvoltage condition. As can be seen in Figure 10, it will be noted that, if at step 236 the voltage is determined not to be below the second minimum voltage, the microcontroller 24b may also send control back to step 216 where an overvoltage condition is checked.

While the above method 200 has been shown to be operated in a certain sequence of steps, it will be understood that the order of the steps may be changed from what is shown in Figure 10. For example, it is possible that the undervoltage condition can be checked before the overvoltage condition is checked. It will further be noted that some steps are optional, it is possible, for example, that no check is made if a selected time period has elapsed if the voltage falls below the second low voltage (e.g. 10VDC).

It will also be understood that the colours and frequencies selected for the light emitting diode (LED) 30 under different conditions may be changed. Indeed the output device need not be an light emitting diode (LED) 30 at all; the output device could instead be some other device, such as, for example, a speaker.

It will be understood, that, while specific hardware is not shown for carrying out some of the steps of the method 200, it will be apparent to one skilled in the art how to carry out these steps, such as checking the voltage for an overvoltage condition or an undervoltage condition.

For example, in an embodiment, a diode may be provided to prevent current flow in a situation where the polarity has been reversed due to connecting the connector 12 (Figure 9) backwards on the port 14 (Figure 1a). Thus, instead of FETs being provided to act as the current flow preventer, the diode may be provided as the current flow preventer. Alternatively, the diode may form part of a current flow preventer along with the FETs in embodiments where both the diode and the FETs are provided.

Regardless of what component or components are provided to prevent current flow in the event of a reverse polarity event, those components that make up the current flow preventer (e.g. the diode) need not be internal to the housing 22. They could be external to the housing 22.

It will be understood that, when it is stated that the microcontroller 24b is programmed or configured to carry out a certain task, it is the microprocessor 24b2 specifically that is programmed or configured to carry out the task.

## Claims

1. A kit of parts (10) for an electrical connector (12), comprising:
a plurality of housing portions (22a, 22b) that are mateable together to form a housing (22);
a first terminal (25a) and a second terminal (25b) that are positionable in the housing (22), wherein the terminals (25a, 25b) are connectable to an electrical conduit (17) and are positioned to connect an electrical power source (19) to the electrical conduit (17),
wherein the terminals (25a, 25b) are male terminals (25a, 25b) and wherein the kit of parts (10) is configured for forming an electrical connector (12) that is connectable to a D-tap connection port on a video camera (13),
**characterized in that** the kit of parts (10) for the electrical connector (12) comprises:
a current flow preventer positioned to prevent current flow through the electrical conduit (17) if the polarity at the terminals (25a, 25b) is other than a selected polarity,
an output device (30) configured to indicate whether the polarity at the male terminals (25a, 25b) is other than a selected polarity, and
a printed circuit board (24a) positionable in the housing (22),
wherein the male terminals (25a, 25b) are connected to the printed circuit board (24a),
wherein the output device (30) is connected to the printed circuit board (24a), wherein the printed circuit board (24a) is connectable to the electrical conduit (17) and is configured to electrically connect the electrical conduit (17) to the male terminals (25a, 25b), and contains a microprocessor (24b2) that is programmed to control the output device (30) to indicate whether the polarity at the male terminals (25a, 25b) is other than a selected polarity.

## Patentansprüche

1. Teilekit (10) für einen elektrischen Steckverbinder (12), umfassend:
mehrere Gehäuseabschnitte (22a, 22b), die miteinander verbindbar sind, um ein Gehäuse (22) zu formen;
eine erste Anschlussklemme (25a) und eine zweite Anschlussklemme (25b), die in dem Gehäuse (22) anordenbar sind, wobei die Anschlussklemmen (25a, 25b) an eine elektrische Leitung (17) anschließbar sind und angeordnet sind, um eine elektrische Stromquelle (19) an die elektrische Leitung (17) anzuschließen,
wobei die Anschlussklemmen (25a, 25b) männliche Anschlussklemmen (25a, 25b) sind und wobei das Teilekit (10) zum Formen eines elektrischen Steckverbinders (12) ausgestaltet ist, der an einen D-Tap-Anschlussabschnitt auf einer Videokamera (13) anschließbar ist,
**dadurch gekennzeichnet, dass** das Teilekit (10) für den elektrischen Steckverbinder (12) umfasst:
einen Stromflussverhinderer, der angeordnet ist, um den Stromfluss durch die elektrische Leitung (17) zu verhindern, wenn die Polarität an den Anschlussklemmen (25a, 25b) keine ausgewählte Polarität ist,
eine Ausgabevorrichtung (30), die zum Anzeigen ausgestaltet ist, ob die Polarität an den männlichen Anschlussklemmen (25a, 25b) keine ausgewählte Polarität ist, und
eine gedruckte Leiterplatte (24a), die im Gehäuse (22) anordenbar ist,
wobei die männlichen Anschlussklemmen (25a, 25b) an die gedruckte Leiterplatte (24a) angeschlossen sind,
wobei die Ausgabevorrichtung (30) an die gedruckte Leiterplatte (24a) angeschlossen ist, wenn die gedruckte Leiterplatte (24a) an die elektrische Leitung (17) anschließbar ist und zum elektrischen Anschließen der elektrischen Leitung (17) an die männlichen Anschlussklemmen (25a, 25b) ausgestaltet ist und einen Mikroprozessor (24b2) umfasst, der zum Steuern der Ausgabevorrichtung (30) programmiert ist, um anzugeben, ob die Polarität an den männlichen Anschlussklemmen (25a, 25b) keine ausgewählte Polarität ist.

## Revendications

1. Kit de pièces (10) pour un connecteur électrique (12), comprenant :
une pluralité de parties de boîtier (22a, 22b) qui peuvent être accouplées conjointement pour former un boîtier (22) ;
une première borne (25a) et une deuxième borne (25b) qui sont positionnables dans le boîtier (22), dans lequel les bornes (25a, 25b) peuvent être connectées à un conduit électrique (17) et sont positionnées afin de connecter une source d'alimentation électrique (19) au conduit électrique (17),
dans lequel les bornes (25a, 25b) sont des bornes mâles (25a, 25b) et dans lequel le kit de pièces (10) est configuré pour former un connecteur électrique (12) qui peut être connecté à un port de connexion D-tap sur une caméra vidéo (13),
**caractérisé en ce que** le kit de pièces (10) pour le connecteur électrique (12) comprend :
un inhibiteur de flux de courant positionné pour empêcher le courant de circuler à travers le conduit électrique (17) si la polarité au niveau des bornes (25a,25b) est autre qu'une polarité sélectionnée,
un dispositif de sortie (30) configurée pour indiquer si la polarité au niveau des bornes mâles (25a, 25b) est autre qu'une polarité sélectionnée, et
une carte de circuit imprimé (24a) positionnable dans le boîtier (22),
dans lequel les bornes mâles (25a, 25b) sont connectées à la carte de circuit imprimé (24a),
dans lequel le dispositif de sortie (30) est connecté à la carte de circuit imprimé (24a), dans lequel la carte de circuit imprimé (24a) peut être connectée au conduit électrique (17) et est configurée pour connecter électriquement le conduit électrique (17) aux bornes mâles (25a, 25b) et contient un microprocesseur (24b2) qui est programmé pour commander le dispositif de sortie (30) afin d'indiquer si la polarité au niveau des bornes mâles (25a, 25b) est autre qu'une polarité sélectionnée.
